# EUROPÄISCHE PATENTSCHRIFT

(11) **EP 3 594 064 B1**
(45) Veröffentlichungstag und Bekanntmachung des Hinweises auf die Patenterteilung: **26.01.2022**
(21) Anmeldenummer: 19181927.5
(22) Anmeldetag: 24.06.2019
(51) Int. Cl.: B60R 7/06

(54) **KLAPPE FÜR EIN ABLAGEFACH EINES FAHRZEUGES UND ABLAGEFACH**
TRAY AND FLAP FOR A TRAY OF A VEHICLE
BATTANT POUR UNE BOÎTE DE RANGEMENT D'UN VÉHICULE ET BOÎTE DE RANGEMENT

(30) Priorität: 09.07.2018 DE 202018103920 U
(43) Veröffentlichungstag der Anmeldung: 15.01.2020
(73) Patentinhaber: Minda KTSN Plastic Solution GmbH & Co. KG, 01796 Pirna (DE)
(72) Erfinder: Muschick, Micha, 02625 Bautzen (DE)
(74) Vertreter: Mader, Joachim

(56) Entgegenhaltungen:
- WO-A1-2009/115347
- DE-A1-102004 015 068
- DE-A1-102006 034 165
- JP-A- 2005 022 629
- JP-A- 2008 174 027
- US-A1- 2005 206 182
- US-A1- 2011 265 586
- US-A1- 2015 360 616

## Beschreibung

Die Erfindung betrifft ein Ablagefach eines Fahrzeuges, wobei eine Klappe bewegbar an dem Ablagefach anordnenbar ist, die Klappe zwischen einer Öffnungsstellung und einer Schließstellung bewegbar ist und der Klappe eine Eingabeeinheit zugeordnet ist.

Üblicherweise werden Ablagefächer in einem Automobil, wie eine klappbare Armlehne in der Mittelkonsole oder ein Handschuhfach, vom Fahrer manuell geöffnet und geschlossen. Dies führt jedoch dazu, dass der Fahrer während der Fahrt beim Betätigen des Ablagefaches abgelenkt ist. Zudem ist je nach Anordnung des Ablagefaches dieses vom Fahrersitz aus schwer erreichbar. Folglich ist sowohl die Sicherheit als der Nutzerkomfort beeinträchtigt.

Aus der US 2011/0265586 A1 ist ein Bedienelement für ein Handschuhfach beschrieben, welches über ein von einem Motor angetriebenen Schneckengetriebe mit einem Stirnrad in ein Antriebsrad eingreift und die Drehbewegung des Schneckengetriebes in eine lineare Bewegung eines Betätigungsstößels zum Bewegen einer Handschuhfachklappe umwandelt. Hierbei kann der Motor auch von einem Signal oder mittels eines Schalters fernangetrieben werden. Nachteilig bei diesem Betätigungssystem sind die komplexen mechanisch bewegten Teile sowie deren Platzbedarf.

In der US 2005/0206182 A1 wird eine Klappe für die Inneneinrichtung eines Fahrzeuges beschrieben, an der außen ein Sensor mit einer Berührungszelle oder Schalter angeordnet ist, welcher ein Signal generiert, welches eine Funktion der gewünschten Position der Klappe ist. Hierzu wird die Position mittels eines innen an der Klappe angeordneten Aktuators mit einem von einem Motor angetriebenen Getriebe eingestellt. Nachteilig an diesem Betätigungssystem ist, dass der Fahrer sich auf die Beifahrerseite hinüberlehnen muss, um den Sensor am Handschuhfach zu betätigen.

Auch aus der US 2015/0360616 A1 ist ein Aktuator bekannt, welcher mittels eines Kontrollers und eines elektrischen Motors über ein Getriebe eine Klappe schließt. Das automatische Schließen der Klappe erfolgt nach einer vorgegebenen Zeit durch Aktivierung des Motors mittels des Kontrollers. Nachteilig bei diesem Schließsystem ist, dass dieses nicht zeitlich flexibel den aktuellem Bedürfnis des Benutzers angepasst werden kann und keine Lösung für ein komfortables Öffnen eines Handschuhfaches bietet.

Aus der WO 2009/115347 A1 ist ein Staufach gemäß dem Oberbegriff des Anspruchs 1, mit einem Staufachdeckel und mit einem Antrieb zum Öffnen und Schließen des Staufachdeckels bekannt, wobei der Staufachdeckel durch eine Selbsthemmung des Antriebs in einer Schließposition oder einer Öffnungsposition haltbar ist und durch eine Bestromung des Antriebs ein Schießmoment auf den Staufachdeckel ausgeübt wird, wenn sich der Staufachdeckel in der Schließposition befindet.

Die JP 2008 174027 A offenbart eine Konsolenbox für eine Mittelkonsole mit einem elektrisch öffnenbaren und schließbaren Schwenkdeckel zum Verschließen der oberen Öffnung der Konsolenbox, wobei zur Bewegung des Schwenkdeckels ein kleiner, leichtgewichtiger und günstiger Gleichstrommotor verwendet wird.

Die DE 10 2005 015 068 A1 beschreibt eine Klappenanordnung mit einer schwenkbaren Klappe, wobei durch einen gemeinsamen motorischen Antrieb sowohl der Schließschieberantrieb als auch ein Verriegelungsantrieb zum Verriegeln des Schließschiebers beweglich antreibbar sind.

Zudem ist bei allen bekannten Systemen nachteilig, dass bei Überlastung eines Handschuhfaches durch zu hohes Gewicht eines im Handschuhfach gelagerten Gegenstandes sowie durch Bewegen der Klappe gegen einen Gegenstand oder eine Person im Öffnungsbereich der Klappe ein Motorschaden der Betätigungseinrichtung auftreten kann.

Aufgabe der Erfindung ist es, den Stand der Technik zu verbessern.

Gelöst wird die Aufgabe durch ein Ablagefach, wobei das Ablagefach als ein Hohlraum in einem Armaturenbrett oder als separates Bauteil, welches in ein Armaturenbrett eines Fahrzeuges einsetzbar ist, ausgebildet ist, und das Ablagefach eine Klappe aufweist, wobei die Klappe bewegbar an dem Ablagefach angeordnet ist, die Klappe zwischen einer Öffnungsstellung und einer Schließstellung bewegbar ist und der Klappe eine Eingabeeinheit zugeordnet ist, und der bewegbaren Klappe ein Gleichstrommotor und ein Stellgetriebe zugeordnet ist, wobei der Gleichstrommotor und/oder das Stellgetriebe mittels einer durch die Eingabeeinheit vorgebbaren Steuerinformation derart ansteuerbar ist oder sind, dass eine Stellung und/oder eine Bewegung der Klappe zwischen der Öffnungsstellung und der Schließstellung elektrisch einstellbar ist, wobei im Falle eines höheren Verbrauchsstroms als eines Bemessungsstroms eine elektrische Bewegungskontrolleinheit derart eingerichtet ist, dass mittels eines Algorithmus die Steuerinformation derart vorgebbar ist, dass bei einer Überlast an der Klappe durch einen im Ablagefach abgelegten Gegenstand die Bewegung der Klappe an die Überlast anpassbar ist, wobei im Falle, dass bei der Überlast die Klappe trotz einer Ansteuerung durch die elektrische Bewegungskontrolleinheit frei von der Bewegung ist, die elektrische Bewegungskontrolleinheit derart eingerichtet ist, dass ein Blockierstrom dem Gleichstrommotor vorgebbar ist.

Durch Verwendung einer Eingabeeinheit mit vorgebbarer Steuerinformation wird die Ablenkung des Fahrers vermindert und dessen Nutzerkomfort erhöht.

Es ist besonders vorteilhaft, dass durch Verwendung eines Gleichstrommotors eine zeitlich und räumlich angepasste Bewegung der Klappe ermöglicht wird. Zudem ist ein Gleichstrommotor unempfindlicher gegenüber seiner Temperatur, der Umgebungstemperatur und/oder der Dauer einer Überlastung. Somit ist insbesondere beim Schließen der Klappe, wenn der Gleichstrommotor gegen die Schwerkraft arbeiten muss, die notwendige Motorleistung und/oder -größe begrenzbar und somit eine Kosten- und/oder Platzeinsparung möglich.

Ein wesentlicher Gedanke der Erfindung beruht darauf, dass ein Gleichstrommotor verwendet wird, welcher verschiedene Überlastfälle handhaben kann, und durch eine vorgebbare Steuerinformation der Eingabeeinheit derart ansteuerbar ist, dass mittels des Gleichstrommotors und des Stellgetriebes die Klappe jede Stellung und/oder jede gewünschte Bewegung zwischen der Öffnungsstellung und der Schließstellung mittels elektrischer Einstellung ausführen kann. Hierbei ist die Bewegung der Klappe vor allem auch in ihrer Geschwindigkeit direkt einstellbar.

Folgendes Begriffliche sei erläutert:

Eine "Klappe" ist insbesondere ein an einer horizontalen Achse befestigtes klappbares Türblatt. Nach Öffnen der Klappe erschließt sich insbesondere ein Hohlraum zur Ablage von Gegenständen. In der Schließstellung schließt die Klappe insbesondere bündig mit der Kontur eines Armaturenbrettes eines Fahrzeuges ab.

Ein "Ablagefach" ist insbesondere ein Fach und/oder Hohlraum zur Ablage von Gegenständen in einem Fahrzeug. Bei einem Ablagefach kann es sich beispielsweise um ein Handschuhfach oder um ein Fach unter der klappbaren Armlehne der Mittelkonsole handeln. Ein Ablagefach ist insbesondere in das Armaturenbrett eines Fahrzeuges integriert.

Ein "Fahrzeug" ist insbesondere Landfahrzeug, Wasserfahrzeug oder Luftfahrzeug. Bei einem Fahrzeug handelt es sich insbesondere um einen Zug oder ein Kraftfahrzeug. Ein Fahrzeug ist insbesondere ein Personen- und/oder Lastkraftwagen.

Unter "Öffnungsstellung" wird die Stellung der bewegbaren Klappe verstanden, in welcher die Klappe maximal aufgeklappt und/oder das Ablagefach maximal geöffnet ist.

In der "Schließstellung" ist die Klappe insbesondere geschlossen, sodass das Ablagefach von außen nicht zugängig ist. In der Schließstellung schließt die Klappe insbesondere bündig an das Ablagefach an und/oder mit dem Armaturenbrett ab.

Eine "Eingabeeinheit" ist insbesondere eine Einheit, über welche ein Benutzer eine Information eingeben kann, wobei mittels einer vorgebbaren Steuerinformation der Gleichstrommotor angesteuert wird.

Ein "Gleichstrommotor" ist insbesondere eine rotierende elektrische Maschine, welche mit Gleichstrom betrieben wird. Bei einem Gleichstrommotor handelt es sich insbesondere um einen Elektromotor, welchem elektrische Energie zugeführt wird und welche dieser in mechanische Leistung umwandelt.

Ein "Stellgetriebe" ist insbesondere ein rotationsübertragendes Getriebe, bei welchem die Übersetzung stufenlos einstellbar ist. Das Stellgetriebe kann ein Schaltgestänge aufweisen. Mittels des Stellgetriebes wird die stufenlose Bewegung der Klappe realisiert.

Bei einer "Steuerinformation" handelt es sich insbesondere um eine Information, welche den Gleichstrommotor ansteuert und somit eine Bewegung und/oder einen Stillstand der Klappe initiiert. Bei einer Steuerinformation kann es sich insbesondere um ein analoges oder digitales Steuersignal handeln.

In einer weiteren Ausführungsform der Klappe ist die Eingabeeinheit ortsfern zur Klappe anordnenbar, sodass die Stellung und/oder die Bewegung der Klappe direkt durch einen Fahrer des Fahrzeuges elektrisch einstellbar ist oder sind.

Dadurch, dass die Eingabeeinheit ortsfern am Tachometer und/oder am Armaturenbrett in direkter Reichweite des Fahrers angeordnet ist, kann der Fahrer die Eingabeeinheit direkt von seinem Fahrersitz aus bedienen, ohne dass dieser sich von seinem Fahrersitz wegbeugen muss. Somit werden der Bedienkomfort und die Sicherheit erhöht.

Unter "ortsfern" wird insbesondere verstanden, dass die Eingabeeinheit entfernt zum Ort der Klappe angeordnet ist. Somit besteht insbesondere bei einer ortsfernen Anordnung der Eingabeeinheit zur Klappe ein definierter Abstand zwischen der Position der Eingabeeinheit und der Position der Klappe im Fahrzeug.

Um den Bedienkomfort des Fahrers zu erhöhen, weist die Eingabeeinheit ein Berührungsfeld, einen Berührungsschalter, eine auditive Eingabeeinheit und/oder eine elektrische Bewegungskontrolleinheit auf oder ist ein Berührungsfeld, ein Berührungsschalter, eine auditive Eingabeeinheit und/oder eine elektrische Bewegungskontrolleinheit.

Dadurch kann der Fahrer eine Eingabe beispielsweise am Kombiinstrument des Fahrzeuges tätigen. Beispielsweise kann die Eingabe des Fahrers zum Betätigen der Klappe auf einem Berührungsfeld des Displays des Navigationssystems erfolgen.

Es ist besonders vorteilhaft, wenn der Öffnungswinkel der Klappe durch die Weite der Wischbewegung mit beispielsweise dem Zeigefinger oder der Weite der Spreizbewegung zwischen Daumen und Zeigefinger auf einem Berührungsdisplay vorgegeben wird.

Bei einem "Berührungsfeld" handelt es sich insbesondere um ein berührungsempfindliches Feld als Eingabegerät, bei welchem durch Berühren die Steuerinformation vorgebbar ist. Bei einem Berührungsfeld handelt es sich insbesondere auch um einen berührungsempfindlichen Bildschirm (auch "Touchscreen" genannt) als ein kombiniertes Eingabe- und/oder Ausgabegerät. Somit erlaubt das Berührungsfeld eine für den Benutzer unmittelbare Steuerung der Stellung und/oder Bewegung der Klappe per Fingerzeig oder -wisch.

Unter einem "Berührungsschalter" wird insbesondere ein Abstandssensor und/oder Näherungsschalter verstanden. Bei einem Berührungsschalter muss nicht zwingend ein manuelles Berühren des Berührungsschalters stattfinden, sondern es ist ausreichend, wenn die Hand des Fahrers sich in die Nähe des Berührungsschalters begibt. Ein Berührungsschalter ist insbesondere ein kapazitiver Sensor. Hierbei kann beispielsweise durch kontinuierliche Annäherung der Hand des Fahrers an den Berührungsschalter die Klappe beständig weiter geöffnet werden.

Bei einer "auditiven Eingabeeinheit" handelt es sich insbesondere um eine Einheit mit einem Modul zur Spracherkennung. Hierbei kann beispielsweise das vorhandene Spracherkennungssystem des Bordsystems des Fahrzeuges genutzt werden. Über das auditive Eingabesystem findet insbesondere eine Sprachsteuerung statt, wobei eine Übermittlung eines Befehls zur Ansteuerung der Klappe per Stimme erfolgt.

Eine "elektrische Bewegungskontrolleinheit" ist insbesondere eine Einheit, welche die Bewegung der Klappe derart koordiniert, dass geplante und ungeplante Bewegungen so ablaufen, dass deren beabsichtigtes Ziel sicher erreicht wird. Die Bewegungskontrolleinheit ermöglicht es insbesondere, auch kompliziertere Bewegungsvorgänge aufgrund einer Überlastung der Klappe und einer Bewegungseinschränkung der Klappe aufgrund eines davor angeordneten Gegenstandes und/oder einer Person zielgerichtet zu bewerkstelligen.

In einer weiteren Ausführungsform ist der Klappe ein Lastsensor, ein Abstandssensor und/oder ein Nahfeldsensor zugeordnet oder die Klappe weist einen Lastsensor, einen Abstandssensor und/oder einen Nahfeldsensor auf, sodass eine Überlast an der Klappe und/oder ein Gegenstand oder eine Person im Bereich der Öffnungsstellung der Klappe sensierbar ist oder sind.

Folglich kann mittels des Sensors oder der Sensoren ein Bewegungsfall erkannt werden, bei dem die Bewegung der Klappe gegebenenfalls aufgrund einer Überlastung des Gleichstrommotors eingeschränkt sein kann. Somit kann eine mögliche Schädigung des Gleichstrommotors frühzeitig erkannt und/oder vermieden werden. Vor allem kann die Bewegung der Klappe an den bewegungsgehinderten Fall derart angepasst werden, dass trotz kleiner Motorgröße eine angepasste Bewegung der Klappe entsprechend der Vorgabe erfolgt.

Bei einem "Lastsensor" handelt es sich insbesondere um einen Gewichts-, Druck- und/oder Stromsensor. Unter "Stromsensor" ist insbesondere ein elektrisches Bauelement zu verstehen, mit dem die Stromstärke in Kabeln, insbesondere galvanisch getrennt (und somit berührungslos), anhand der durch elektrische Ströme ausgelösten magnetischen Flussdichte gemessen werden können. Bei einem Stromsensor handelt es sich insbesondere um einen Gleichstromsensor unter Verwendung eines Hall-Sensors.

Ein "Abstandssensor" ist insbesondere ein Sensor, welcher den räumlichen Abstand der Klappe zu einem Gegenstand und/oder einer Person bestimmt. Bei einem Abstandssensor handelt es sich beispielsweise um einen kapazitiven Abstandssensor. Bei einem Abstandssensor kann es sich auch um einen Wegsensor handeln, welcher insbesondere den Abstand zwischen der sich bewegenden Klappe und einem Bezugspunkt oder von Längenänderungen misst.

Ein "Nahfeldsensor" ist insbesondere ein Sensor, welcher Bewegungen in unmittelbarer Nähe zur Klappe registriert. Bei einem Nahfeldsensor kann es sich beispielsweise auch um einen kapazitiven Näherungsschalter handeln.

Um den Fahrer auf eine Störung im vorgesehenen Bewegungsablauf der Klappe und/oder eine Überlastung des Gleichstrommotors hinzuweisen, ist oder sind der Klappe eine auditive Ausgabeeinheit und/oder eine visuelle Ausgabeeinheit zugordnet, sodass insbesondere im Fall einer sensierten Überlast ein Warnsignal ausgebbar ist.

Somit kann der Fahrer mittels des Warnsignals direkt darauf aufmerksam gemacht werden, dass der vorgesehene Bewegungsablauf der Klappe nicht vollständig ausgeführt werden kann und in diesem Fall gegebenenfalls eine manuelle Intervention des Fahrers notwendig ist. Beispielsweise ist es aufgrund eines zu hohen Gewichtes im Ablagefach, welches in der Öffnungsstellung direkt auf die Klappe von oben drückt, nicht mehr möglich, mittels des Gleichstrommotors gegen die Schwerkraft die Klappe zu schließen. In diesem Sonderfall muss nun der Fahrer die Klappe manuell schließen.

Bei einer "visuellen Ausgabeeinheit" handelt es sich beispielsweise um eine optische Anzeige am Armaturenbrett, im Tachometer und/oder auf einem Bildschirm.

Eine "auditive Ausgabeeinheit" ist beispielsweise ein Lautsprecher, mit dem ein hörbares Warnsignal ausgegeben wird. Dazu kann beispielsweise das bereits an Bord des Fahrzeugs befindliche Lautsprechersystem verwendet werden.

Somit wird ein Ablagefach mit hohem Benutzerkomfort und hoher Sicherheit während der Fahrt für den Fahrer bereitgestellt.

Vor allem ist das Ablagefach ferngesteuert elektrisch öffnen- und schließbar, ohne dass der Fahrer dieses manuell betätigen muss.

Um ein einfach in ein Armaturenbrett einbaubares und kompaktes Ablagefach bereitzustellen, weist das Ablagefach den Gleichstrommotor, das Stellgetriebe, den Lastsensor, den Abstandssensor und/oder den Nahfeldsensor auf.

In einer weiteren Ausführungsform des Ablagefaches ist die elektrische Bewegungskontrolleinheit derart eingerichtet, dass über die Steuerinformation die Stellung und/oder die Bewegung der Klappe anhand eines durch den Lastsensor ermittelten Verbrauchsstroms des Gleichstrommotors im Verhältnis zu einem vorgegebenen Bemessungsstrom mittels der elektrischen Bewegungskontrolleinheit einstellbar ist.

Dadurch kann über das Verhältnis des ermittelten aktuellen Verbrauchsstroms des Gleichstrommotors zu einem vorgegebenen Bemessungsstrom eine Überlastung des Gleichstrommotors erkannt und diese entsprechend in der Bewegungskontrolle der Klappe berücksichtigt werden.

Im Falle, dass der Motor einen Verbrauchsstrom zieht, welcher kleiner oder gleich des Bemessungsstroms ist, ist keine weitere Bewegungskontrollstrategie notwendig.

In dem Fall, in dem der Lastsensor eine Überlastung des Motors in der anfänglichen Bewegungsphase ermittelt und somit der Verbrauchsstrom größer als der Bemessungsstrom ist, wird mittels eines Algorithmus die Belastung auf der Klappe und die notwendige Zeit zum Schließen der Klappe berechnet. Sofern diese Zeit nur in der Größenordnung von einigen Sekunden liegt, kann der Gleichstrommotor einen solchen höheren Verbrauchsstrom bewältigen und keine spezielle Bewegungskontrolle ist notwendig.

Somit wird mittels des Verhältnisses von aktuellem Verbrauchsstrom zu vorgegebenem Bemessungsstrom die Bewegungskontrolle der Klappe entsprechend angepasst und vor einem Schließen der belasteten Klappe die Motorsicherheit und Funktionsfähigkeit berücksichtigt und gewährleistet. Dadurch werden eine Überhitzung und Schäden am Gleichstrommotor vermieden sowie eine lange Lebensdauer des Gleichstrommotors ermöglicht.

Ein "Algorithmus" ist insbesondere ein Rechenvorgang nach einem bestimmten, sich wiederholenden Schema. Ein Algorithmus besteht insbesondere aus endlich vielen, wohldefinierten Einzelschritten. Ein Algorithmus kann insbesondere zur Ausführung in einem Computerprogramm implementiert sein. Bei einem Algorithmus kann es sich um einen steuer- und/oder regelbasierten Algorithmus handeln.

Der "Verbrauchsstrom" korreliert insbesondere zu der Menge an elektrischer Energie, welche der Gleichstrommotor für seinen aktuellen Betrieb benötigt.

Der "vorgegebene Bemessungsstrom" ist insbesondere proportional zu der Menge an elektrischer Energie, die vom Hersteller des Gleichstrommotors für eine festgelegte Betriebsbedingung dem Gleichstrommotor zugeordnet ist. Der Bemessungsstrom wird insbesondere als elektrische Stromstärke in Ampere angegeben. Bei dem Bemessungsstrom handelt es sich insbesondere auch um einen Bemessungsdauerstrom, bei dem zusätzlich eine definierte Betriebsdauer festgelegt wird.

Um verschiedene Überlastfälle der Klappe zu handhaben, ist erfindungsgemäß im Falle eines höheren Verbrauchsstroms als Bemessungsstrom die elektrische Bewegungskontrolleinheit derart eingerichtet, dass mittels eines Algorithmus die Steuerinformation derart vorgebbar ist, dass bei einer Überlast an der Klappe durch einen im Ablagefach abgelegten Gegenstand die Bewegung der Klappe an die Überlast angepasst und/oder ein Warnsignal mittels der auditiven Ausgabeeinheit und/oder der visuellen Ausgabeeinheit abgebbar ist oder sind.

Da die Überlast mittels des Algorithmus begrenzbar und gegebenenfalls mittels eines manuellen Benutzereingriffes nach Ausgabe eines Warnsignals behoben werden kann, kann der Gleichstrommotor entsprechend mit einer kleineren Motorgröße und/oder -leistung ausgebildet und dadurch die Baugröße des Motors sowie des Ablagefaches entsprechend kleiner realisiert werden.

Hierbei ist es besonders vorteilhaft, dass der neue Algorithmus sowohl den Großteil der Fälle umfasst, in denen der Gleichstrommotor keiner Überlastung ausgesetzt ist, sowie denjenigen Fällen der Überlast, in denen der Algorithmus dem Benutzer assistiert, indem ein höheres Motordrehmoment des Gleichstrommotors ermöglicht oder der Benutzer auf eine Reduzierung der Gewichtsbelastung der Klappe hingewiesen wird.

Wenn der Überlastungsstrom größer als die Kapazität des Gleichstrommotos ist, berechnet der Algorithmus die Zeit für welche der Gleichstrommotor sicher die Überlast und/oder den Blockierstrom trägt. Dieser Blockierstrom wird durch den Motor für die berechnete sichere Zeitdauer zugeführt. Während dieser Zeit wird beispielsweise ein Warnhupton und/oder ein sichtbares LED-Warnlicht ausgegeben, um sicherzustellen, dass der Benutzer ein Aussetzen der Bewegung der Klappe aufgrund der Überlast wahrnimmt. Der Benutzer kann nun entweder die Gewichtsbelastung im Ablagefach reduzieren oder unterstützt vom Gleichstrommotor manuell die Klappe schließen.

Im Falle, dass der Benutzer nicht eingreift, wird die Stromzufuhr zum Gleichstrommotor unterbrochen und beispielsweise mittels einer sichtbaren Blinkanzeige dem Fahrer angezeigt, dass ein Befehlsfehler aufgrund von Überlastung vorliegt. Eine programmierbare Anzahl von Wiederholungen wird durchgeführt, sodass nun die Klappe mit Eingreifen des Benutzers geschlossen werden kann. Die sichere Anzahl von Wiederholungen ist aufgrund einer vorhergehenden Historie von Aussetzbetrieben begrenzt.

Nach Erfolgen der programmierten Anzahl von Wiederholungen wird der Eingabebefehl des Benutzers abgebrochen, sofern der Benutzer nicht manuell den Eingabebefehl während der Wiederholungen unterstützt oder eine neue Eingabe mittels der Eingabeeinheit vornimmt.

Der verwendete, neue Algorithmus basiert auf einer vorhergehenden Historie von Blockierstromdauern für den Betrieb des Gleichstrommotors sowie einer Zeit-Versus-Strom-Charakteristik spezifiziert durch den Motorhersteller.

Erfindungsgemäß ist im Falle, dass bei der Überlast die Klappe trotz einer Ansteuerung durch die elektrische Bewegungskontrolleinheit frei von der Bewegung ist, die elektrische Bewegungskontrolleinheit derart eingerichtet, dass ein Blockierstrom dem Gleichstrommotor vorgebbar ist.

Somit kann eine motorschädigende Überlastung des Gleichstrommotors verhindert werden.

Ein "Blockierstrom" entspricht insbesondere der Menge an elektrischer Energie, welche der Gleichstrom "ziehen" kann, wenn seine Drehachse blockiert.

Um ein unbeabsichtigtes Öffnen der Klappe zu verhindern, weist die Klappe eine elektrisch betätigbare Schließeinheit auf, sodass anhand der Steuerinformation der Eingabeeinheit die Klappe und/oder das Ablagefach sicherbar ist oder sind.

Eine "Schließeinheit" ist insbesondere eine Vorrichtung, welche ein Öffnen der Klappe und/oder des Ablagefaches verhindert. Bei einer Schließeinheit kann es sich beispielsweise um ein elektrisch betätigbares Magnetschloss oder um eine Verriegelung mit Funkfernsteuerung handeln. Beispielsweise kann auf beiden Seiten eines Schlosses eine Zugstange mit einer Federung angeordnet sein, wobei an den beiden Enden, welche jeweils dem Schloss entgegengesetzt liegen, jeweils ein unterschiedlich polarisierter Magnet angeordnet ist. Hierbei wird das jeweilige Magnetfeld durch einen magnetischen Körper oder zwei magnetische Körper und/oder durch einen elektrischen Stromkreis induziert, welcher oder welche im Handschuhfach angeordnet ist oder sind. Durch Verändern des entsprechenden Magnetfeldes wird das Schloss verriegelt oder entriegelt. Alternativ kann die Zugstange mittels eines elektrisch angesteuerten Stell- und/oder Linearmotors bewegt und dadurch in die Verriegelungs- oder Entriegelungsstellung gebracht werden.

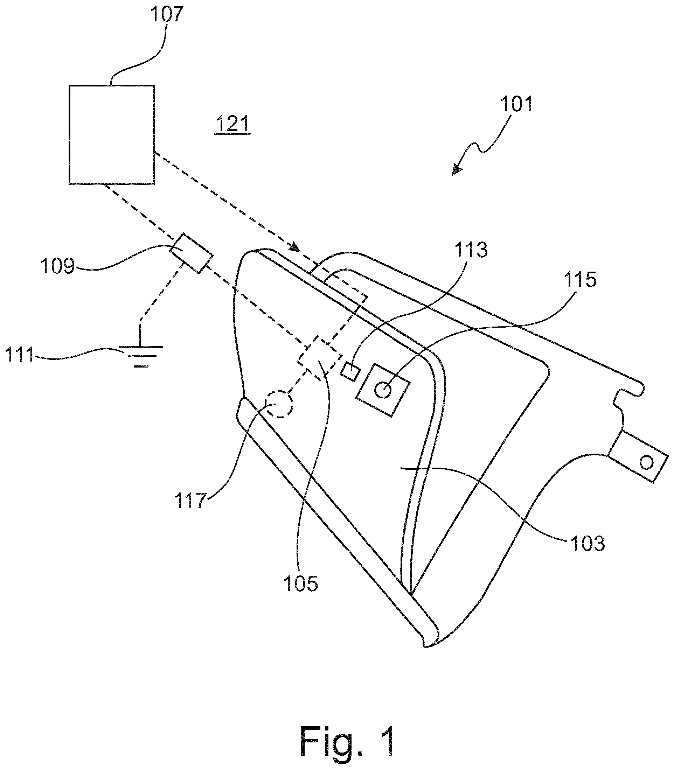

Im Weiteren wird die Erfindung anhand eines Ausführungsbeispiels näher erläutert. Es zeigt
- Figur 1: eine stark schematische Darstellung eines Handschuhfaches und eine elektrische Bewegungskontrolleinheit.

Ein Handschuhfach 101 in einem nicht gezeigten Kraftfahrzeug weist eine bewegbare Klappe 103 auf. An einer sichtbaren Außenseite der Klappe 103 sind ein Abstandssensor 113 und ein Magnetschloss 115 angeordnet. In einer Seitenwand des Handschuhfaches 101 sind ein Gleichstrommotor 105 und ein Stellgetriebe 117 angeordnet. Der Gleichstrommotor 105 ist für eine Spannung von 12 V und eine Nennleistung von 160 W ausgelegt.

Der Gleichstrommotor 105 ist elektrisch mit einer elektrischen Bewegungskontrolleinheit 107 verbunden, welche am Armaturenbrett 121 in unmittelbarer Reichweite des Fahrers eines Kraftfahrzeuges angeordnet ist.

Des Weiteren ist der Gleichstrommotor 105 elektrisch mit einem Stromsensor 109 verbunden, welcher wiederum mit einer Erdung 111 sowie der elektrischen Bewegungskontrolleinheit 107 verbunden ist. Ebenso ist das Magnetschloss elektrisch (nicht gezeigt) mit der elektrischen Bewegungskontrolleinheit 107 verbunden.

Folgende Arbeitsvorgänge werden mit dem Handschuhfach 101 realisiert:

Vor Starten eines nicht gezeigten Motors des Kraftfahrzeuges hat der Fahrer das Handschuhfach 101 manuell geöffnet und mehrere Bücher sowie seine Sonnenbrille in das Handschuhfach 101 gelegt und dieses manuell wieder geschlossen. Während der Fahrt möchte der Fahrer nun seine Sonnenbrille aus dem Handschuhfach 101 entnehmen. Daraufhin führt der Fahrer mit seinem Zeigefinger eine Wischbewegung an einem nicht gezeigten Touchscreen aus, welches der elektrischen Bewegungskontrolleinheit 107 zugeordnet ist. Durch die Wischbewegung wird ein Befehl zum vollständigen Öffnen der Klappe 103 gegeben, woraufhin die elektrische Bewegungskontrolleinheit 107 ein entsprechendes Steuersignal an den Gleichstrommotor 105 gibt und der Gleichstrommotor 105 über das Stellgetriebe 117 die Klappe 103 vollständig öffnet, sodass die Klappe 103 in Öffnungsstellung ist. Dadurch ist das Handschuhfach 101 geöffnet und der Fahrer entnimmt seine Sonnenbrille aus dem Handschuhfach 101.

Anschließend gibt der Fahrer mittels einer zugeordneten Wischbewegung am nicht gezeigten Touchscreen einen Befehl zum vollständigen Schließen der Klappe 103 an die elektrische Bewegungskontrolleinheit 107. Die elektrische Bewegungskontrolleinheit 107 sendet ein entsprechendes Steuersignal wiederum an den Gleichstrommotor 105. Aufgrund des sehr hohen Gewichtes der zuvor in das Handschuhfach 101 eingelegten Bücher war zwar ein Öffnen aufgrund eines Niederfallens der Klappe 103 und des Gleichstrommotors 105 möglich, jedoch ist der Gleichstrommotor 105 nun nicht in der Lage, aufgrund des auf die Klappe 103 einwirkenden Gewichtes gegen die Schwerkraft die Klappe 103 wieder zu schließen. Dieser Überlastungsfall wird durch den Stromsensor 109 detektiert, welcher einen aktuellen Verbrauchsstrom des Gleichstrommotors 105 gegenüber der Erdung 111 bestimmt und an die elektrische Bewegungskontrolleinheit 107 weitergibt.

Die elektrische Bewegungskontrolleinheit 107 vergleicht diesen aktuell bestimmten Verbrauchsstrom mit einem Bemessungsstrom des Gleichstrommotors 105 und gibt diese Werte in einen Algorithmus ein. Mittels des Algorithmus wird eine Zeitdauer berechnet, in welcher der Gleichstrommotor 105 frei von einer Schädigung die Überlastung trägt. Dementsprechend wird ein Blockierstrom für die berechnete Zeitdauer von der elektrischen Bewegungskontrolleinheit 107 an den Gleichstrommotor 105 gegeben. Dadurch bleibt eine Bewegung der Klappe 103 ausgesetzt und zeitgleich werden über die elektrische Bewegungskontrolleinheit 107 ein auditives Warnhupsignal sowie ein rot blinkendes LED-Warnlicht in der Instrumentenanzeige des Fahrzeuges an den Fahrer ausgegeben.

Daraufhin nimmt der Fahrer den Überlastungsfall der Klappe 103 wahr und entnimmt manuell einige der Bücher aus dem Handschuhfach 101. Nach Ablauf der Sicherheitszeit für den von der elektrischen Bewegungskontrolleinheit 107 vorgegebenen Blockierstrom nimmt der Gleichstrommotor 105 seinen regulären Betrieb wieder auf und mittels des Stromsensors 107 wird festgestellt, dass der aktuelle Verbrauchsstrom unter dem Bemessungsstrom des Gleichstrommotors 105 liegt. Somit wird die Schließbewegung der Klappe 103 fortgesetzt, bis das Handschuhfach 101 vollständig verschlossen ist.

Nach Beendigung der Fahrt gibt der Fahrer mittels des Spracherkennungssystems des Fahrzeuges einen Befehl zum Verschließen des Handschuhfaches 101. Ein entsprechendes Steuersignal wird von der elektrischen Bewegungskontrolleinheit 107 an einen nicht gezeigten Schalter in einem nicht gezeigten Stromkreis im Handschuhfach 101 gegeben. Daraufhin schließt der Schalter den Stromkreis, wodurch in zwei nicht gezeigte Magneten an beiden Enden einer nicht gezeigten Zugstange mit einer Federung jeweils ein Magnetfeld induziert wird. Dadurch bewegt sich die magnetisch angesteuerte Zugstande und das Magnetschloss 117 wird verriegelt.

Somit wird ein Handschuhfach 101 bereitgestellt, welches für den Fahrer einen hohen Benutzerkomfort und eine hohe Sicherheit während des Fahrens gewährleistet und bei dem nur im Falle einer sehr starken Überlastung ein Benutzereingriff zum Schutz des Gleichstrommotors 105 notwendig ist.

### Bezugszeichenliste

- 101: Handschuhfach
- 103: Klappe
- 105: Gleichstrommotor
- 107: elektrische Bewegungskontrolleinheit
- 109: Stromsensor
- 111: Erdung
- 113: Abstandssensor
- 115: Magnetschloss
- 117: Stellgetriebe
- 121: Armaturenbrett

## Patentansprüche

1. Ablagefach (101), wobei das Ablagefach (101) als ein Hohlraum in einem Armaturenbrett (121) oder als separates Bauteil, welches in ein Armaturenbrett eines Fahrzeuges einsetzbar ist, ausgebildet ist, und das Ablagefach eine Klappe (103) aufweist, wobei die Klappe bewegbar an dem Ablagefach angeordnet ist, die Klappe zwischen einer Öffnungsstellung und einer Schließstellung bewegbar ist und der Klappe eine Eingabeeinheit zugeordnet ist, wobei der bewegbaren Klappe ein Gleichstrommotor (105) und ein Stellgetriebe (117) zugeordnet ist, wobei der Gleichstrommotor und/oder das Stellgetriebe mittels einer durch die Eingabeeinheit vorgebaren Steuerinformation derart ansteuerbar ist oder sind, dass eine Stellung und/oder eine Bewegung der Klappe zwischen der Öffnungsstellung und der Schließstellung elektrisch einstellbar ist, und im Falle eines höheren Verbrauchsstroms als eines Bemessungsstroms eine elektrische Bewegungskontrolleinheit (107) derart eingerichtet ist, dass mittels eines Algorithmus die Steuerinformation derart vorgebbar ist, dass bei einer Überlast an der Klappe durch einen im Ablagefach abgelegten Gegenstand die Bewegung der Klappe an die Überlast anpassbar ist, **dadurch gekennzeichnet, dass** im Falle, dass bei der Überlast die Klappe trotz einer Ansteuerung durch die elektrische Bewegungskontrolleinheit frei von der Bewegung ist, die elektrische Bewegungskontrolleinheit derart eingerichtet ist, dass ein Blockierstrom dem Gleichstrommotor vorgebbar ist.

2. Ablagefach (101) nach Anspruch 1, **dadurch gekennzeichnet, dass** die Eingabeeinheit ortsfern zur Klappe anordenbar ist, sodass die Stellung und/oder die Bewegung der Klappe direkt durch einen Fahrer des Fahrzeuges elektrisch einstellbar ist oder sind.

3. Ablagefach (101) nach einem der vorherigen Ansprüche, **dadurch gekennzeichnet, dass** die Eingabeeinheit ein Berührungsfeld, einen Berührungsschalter, eine auditive Eingabeeinheit und/oder die elektrische Bewegungskontrolleinheit (107) aufweist oder ist.

4. Ablagefach (101) nach einem der vorherigen Ansprüche, **dadurch gekennzeichnet, dass** der Klappe ein Lastsensor (109), ein Abstandsensor (113) und/oder ein Nahfeldsensor zugeordnet ist oder die Klappe einen Lastsensor, einen Abstandsensor und/oder einen Nahfeldsensor aufweist, sodass die Überlast an der Klappe und/oder ein Gegenstand oder eine Person im Bereich der Öffnungsstellung der Klappe sensierbar ist oder sind.

5. Ablagefach (101) nach einem der vorherigen Ansprüche, **dadurch gekennzeichnet, dass** der Klappe eine auditive Ausgabeeinheit und/oder eine visuelle Ausgabeeinheit zugeordnet ist oder sind, sodass insbesondere im Falle einer sensierten Überlast ein Warnsignal ausgebbar ist.

6. Ablagefach (101) nach einem der vorherigen Ansprüche, **dadurch gekennzeichnet, dass** das Ablagefach den Gleichstrommotor (105), das Stellgetriebe (117), den Lastsensor (109), den Abstandsensor (113) und/oder den Nahfeldsensor aufweist.

7. Ablagefach (101) nach einem der Ansprüche 4 bis 6, **dadurch gekennzeichnet, dass** die elektrische Bewegungskontrolleinheit (107) derart eingerichtet ist, dass über die Steuerinformation die Stellung und/oder die Bewegung der Klappe anhand des durch den Lastsensor ermittelten Verbrauchstroms des Gleichstrommotors im Verhältnis zu dem vorgegebenen Bemessungsstrom mittels der elektrischen Bewegungskontrolleinheit einstellbar ist.

8. Ablagefach (101) nach einem der Ansprüche 5 bis 7, **dadurch gekennzeichnet, dass** bei der Überlast an der Klappe durch einen im Ablagefach abgelegten Gegenstand ein Warnsignal mittels der auditiven Ausgabeeinheit und/oder der visuellen Ausgabeeinheit abgebbar ist.

9. Ablagefach nach einem der vorherigen Ansprüche, **dadurch gekennzeichnet, dass** die Klappe eine elektrisch betätigbare Schließeinheit (115) aufweist, sodass anhand der Steuerinformation der Eingabeeinheit die Klappe und/oder das Ablagefach sicherbar ist oder sind.

## Claims

1. Storage compartment (101), the storage compartment (101) being formed as a cavity in a dashboard (121) or as a separate component which can be inserted into a dashboard of a vehicle, and the storage compartment comprising a flap (103), wherein the flap is movably arranged at the storage compartment, the flap is movable between an open position and a closed position and an input unit is assigned to the flap, wherein a direct current motor (105) and an actuating gear (117) are assigned to the movable flap, wherein the direct current motor and/or the actuating gear is or are controllable by control information which can be preset by the input unit in such a manner that a position and/or a movement of the flap between the open position and the closed position can be set electrically, and in the case of a higher consumption current than a rated current, an electrical movement control unit (107) is configured such that the control information can be preset by means of an algorithm in such a way that, in the event of an overload at the flap due to an object deposited in the storage compartment, the movement of the flap can be adapted to the overload, **characterized in that**, in the event that, at the overload, the flap is free from the movement despite being actuated by the electrical movement control unit, the electrical movement control unit is configured such that a blocking current can be preset for the direct current motor.

2. Storage compartment (101) according to claim 1, **characterized in that** the input unit can be arranged remotely from the flap, so that the position and/or the movement of the flap can be set electrically directly by a driver of the vehicle.

3. Storage compartment (101) according to any one of the preceding claims, **characterized in that** the input unit comprises or is a touch field, a touch switch, an auditory input unit and/or the electrical movement control unit (107).

4. Storage compartment (101) according to any one of the preceding claims, **characterized in that** a load sensor (109), a distance sensor (113) and/or a near-field sensor is associated with the flap, or the flap comprises a load sensor, a distance sensor and/or a near-field sensor, such that the overload at the flap and/or an object or person in the area of the opening position of the flap can be sensed.

5. Storage compartment (101) according to any one of the preceding claims, **characterized in that** the flap is provided with an auditory output unit and/or a visual output unit so that in particular in the event of a sensed overload a warning signal can be emitted.

6. Storage compartment (101) according to any one of the preceding claims, **characterized in that** the storage compartment comprises the direct current motor (105), the actuating gear (117), the load sensor (109), the distance sensor (113) and/or the near field sensor.

7. Storage compartment (101) according to any one of claims 4 to 6, **characterized in that** the electrical movement control unit (107) is configured in such a way that, via the control information, the position and/or the movement of the flap can be adjusted by means of the electrical movement control unit on the basis of the consumption current, determined by the load sensor, of the direct current motor in relation to the predetermined rated current.

8. Storage compartment (101) according to any one of claims 5 to 7, **characterized in that**, in the event of the overload at the flap by an object deposited in the storage compartment, a warning signal can be emitted by means of the auditory output unit and/or the visual output unit.

9. Storage compartment according to any one of the preceding claims, **characterized in that** the flap has an electrically actuatable closing unit (115), so that the flap and/or the storage compartment can be secured on the basis of the control information from the input unit.

## Revendications

1. Compartiment de rangement (101), le compartiment de rangement (101) étant conformé en un réceptacle dans un tableau de bord (121) ou en un élément structurel séparé qui est encastrable dans un tableau de bord d'un véhicule, et le compartiment de rangement comportant un abattant (103), l'abattant étant disposé de manière mobile sur le compartiment de rangement, l'abattant étant mobile entre une position ouverte et une position fermée, et une unité d'entrée étant associée à l'abattant, un moteur à courant continu (105) et un mécanisme de positionnement (117) étant associés à l'abattant mobile, le moteur à courant continu et/ou le mécanisme de positionnement étant commandable ou commandables au moyen d'une information de commande qui peut être spécifiée par l'intermédiaire de l'unité d'entrée de façon qu'une position et/ou un déplacement de l'abattant entre la position ouverte et la position fermée puisse être obtenus électriquement et, en cas de courant consommé supérieur à un courant nominal, une unité électrique de contrôle de déplacement (107) est agencée de façon qu'au moyen d'un algorithme, l'information de commande est spécifiée de façon qu'en cas de surcharge au niveau de l'abattant due à un objet déposé dans le compartiment de rangement, le déplacement de l'abattant soit adaptable à la surcharge, **caractérisé en ce qu'au** cas où, en présence de la surcharge, l'abattant n'effectue aucun déplacement malgré une commande par l'intermédiaire de l'unité électrique de contrôle de déplacement, l'unité électrique de contrôle de déplacement est agencée de façon qu'un courant de blocage soit spécifiée au moteur à courant continu.

2. Compartiment de rangement (101) selon la revendication 1, **caractérisé en ce que** l'unité d'entrée peut être disposée à distance par rapport à l'abattant, de sorte que la position et/ou le déplacement de l'abattant peut ou peuvent être obtenus électriquement directement par un conducteur du véhicule.

3. Compartiment de rangement (101) selon une des revendications précédentes, **caractérisé en ce que** l'unité d'entrée comporte ou est une zone tactile, un commutateur tactile, une unité d'entrée audio et/ou l'unité électrique de contrôle de déplacement (107).

4. Compartiment de rangement (101) selon une des revendications précédentes, **caractérisé en ce qu'un** capteur de charge (109), un capteur de distance (113) et/ou un capteur de champ proche est associé à l'abattant, ou l'abattant comporte un capteur de charge, un capteur de distance et/ou un capteur de champ proche, de sorte que la surcharge au niveau de l'abattant et/ou un objet ou une personne dans la zone de la position ouverte de l'abattant est ou sont détectables.

5. Compartiment de rangement (101) selon une des revendications précédentes, **caractérisé en ce qu'**une unité de sortie auditive et/ou une unité de sortie visuelle est ou sont associées à l'abattant, de sorte que, en particulier en cas de surcharge détectée, un signal d'avertissement peut être émis.

6. Compartiment de rangement (101) selon une des revendications précédentes, **caractérisé en ce que** le compartiment de rangement comporte le moteur à courant continu (105), le mécanisme de positionnement (117), le capteur de charge (109), le capteur de distance (113) et/ou le capteur de champ proche.

7. Compartiment de rangement (101) selon une des revendications 4 à 6, **caractérisé en ce que** l'unité électrique de contrôle de déplacement (107) est agencée de sorte que, par l'intermédiaire de l'information de commande, la position et/ou le déplacement de l'abattant peut être obtenu, au moyen de l'unité électrique de contrôle de déplacement, à l'aide du courant de consommation du moteur à courant continu enregistré par le capteur de charge par rapport au courant nominal spécifié.

8. Compartiment de rangement (101) selon une des revendications 5 à 7, **caractérisé en ce que,** en cas de surcharge au niveau de l'abattant due à un objet déposé dans le compartiment de rangement, un signal d'avertissement peut être émis au moyen de l'unité de sortie auditive et/ou de l'unité de sortie visuelle.

9. Compartiment de rangement selon une des revendications précédentes, **caractérisé en ce que** l'abattant comporte une unité de fermeture actionnable électriquement (115), de sorte que, à l'aide de l'information de commande de l'unité d'entrée, l'abattant et/ou le compartiment de rangement est ou sont sécurisables.
